# EUROPEAN PATENT SPECIFICATION

(11) **EP 2 399 492 B1**
(45) Date of publication and mention of the grant of the patent: **05.06.2013**
(21) Application number: 11462007.3
(22) Date of filing: 02.05.2011
(51) Int. Cl.: A47J 17/02, A47J 43/25

(54) **Multiple kitchen utensil**
Vielseitiges Küchen-Utensil
Ustensile de cuisine multiple

(43) Date of publication of application: 28.12.2011
(73) Proprietor: Erdei, József Tibor, 4002 Debrecen (HU)
(72) Inventor: Erdei, József Tibor, 4002 Debrecen (HU)
(74) Representative: Jakabné Molnar, Judit

(56) References cited:
- DE-U1-202004 017 095
- DE-U1-202007 006 111
- US-B1- 6 619 194

## Description

The invention relates to a multiple kitchen utensil primarily for peeling, slicing, or cutting fruits and vegetables, comprising a cutting unit and a holding element. The cutting unit has a knife mount and an elongated grip connected to the knife mount. The knife mount is implemented as a U-shaped frame, with the stems thereof extending outward from the grip being terminated in parallel prongs, and with at least one knife blade being arranged between the prongs perpendicular to the longitudinal axis of the grip, the knife blade being rotatably mounted between stops attached to the prongs.

The prior art contains many different types of peelers and slicing or cutting devices used as household kitchen tools. The patent specification EP 1,417,913 discloses a peeler for cleaning fruits or vegetables. The peeler has an elongated grip and a fork-like mounting where a knife blade is rotatably mounted between stops. The knife blade is disposed in the mounting perpendicular to the grip, and has a middle groove comprising cutting edges. A further device, for instance s a gouger, is connected to the other end of the mounting opposite the knife blade.

The patent specification US 6,619,194 discloses a multiple peeler. The peeler according to the document has an elongated handle and a knife holder attached to the handle, with two knife blades being rotatably mounted in the knife holder. Both knife blades are arranged differently, one blade being suitable for peeling, and the other for cutting vegetables into small pieces.

Other multipurpose kitchen devices, capable of both peeling and slicing, have also become known by use. These devices have a peeler unit known per se that has a fork-like knife mount through which a holding element may be introduced between the grip and the knife blade such that in the use position the knife blade is positioned perpendicular to the longitudinal axis of the holding element, above an opening formed therein. This solution has a number of disadvantages. First, the holding element should be relatively narrow (or be narrowed to a great extent) in order to fit between the prongs of the fork-like knife mount of the peeler. A further drawback is that in the use position the fork-like knife mount of the peeler extends over the holding element and in that position it hinders the peeling and slicing operation. Yet another disadvantage is that it is relatively difficult to assemble the peeler and the holding element to bring the device into use position, and thus housewives often have to resort to multiple trial-and-error attempts. In the known device only a single-blade peeler may be applied, which limits the field of possible use. Because of the above mentioned drawbacks the known kitchen devices are usually not used any more by housewives after a brief initial period, and are quietly put on the shelf. It may also happen that the devices get broken after a period of continuous use or under heavier load.

Document DE-U-20 2007 006111 discloses a multiple kitchen utensil.

The objective of the present invention is to develop a multiple kitchen utensil that may be widely used and may be assembled easily. Another objective of the invention is that the holding element may have substantially the same width as the knife blade of the peeler or slicer unit. A still further objective is that the device may be used comfortably and, if possible, may be durable.

During the development of the solution according to the present invention we recognised that by providing an arrangement where the knife is snapped in under the holding element such that only the knife blade extends from the upper surface of the holding element, a stronger, more robust device can be obtained that is also easier to assemble.

The objectives of the invention are fulfilled by the features specified in Claim 1. Other non-restrictive preferred embodiments are described in the dependent claims.

The multiple kitchen utensil according to the invention may be used to peel, cut and slice different fruits and vegetables. The requested scope of protection is not, however, limited to fruits and vegetables as the invention is capable of slicing and cutting other foodstuff or other materials found in a household. For instance, the device may be advantageously applied for slicing cheese or even for producing soap flakes.

In a manner similar to conventional solutions, the cutting unit of the multiple utensil is capable of peeling e.g. cucumbers or pumpkins. The gougers disposed on the knife mount of the cutting unit may be applied for removing smaller damaged parts of fruits and vegetables.

When the cutting unit is snapped in the holding element, the device may be applied for easily slicing fruits and vegetables having harder flesh. The device is especially suited for slicing and cutting potatoes and carrots. By selecting a suitable knife blade, the device may also be easily applied for the so-called "julienne cutting" of vegetables.

The invention is described in more detail below referring to the accompanying drawings, where
Fig. 1 shows an embodiment known per se of the cutting unit,
Fig. 2 shows another embodiment known per se of the cutting unit,
Fig. 3 is the axonometric top view of a preferred embodiment of the holding element according to the invention,
Fig. 4 shows the axonometric underside view of the holding element shown in
Fig. 3,

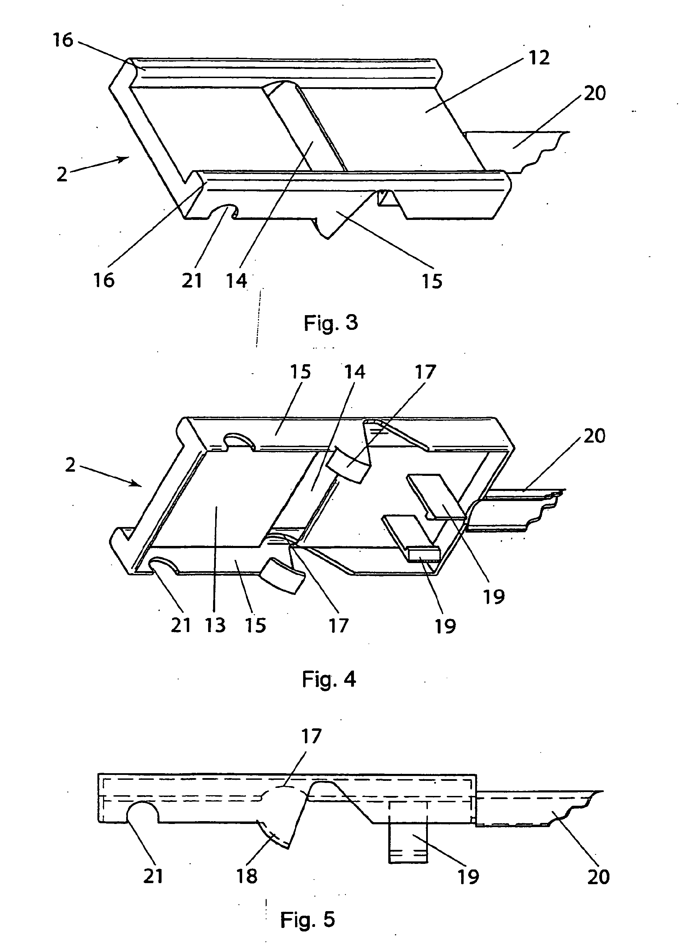

Fig. 5 is the front view of the holding element shown in Fig. 3,

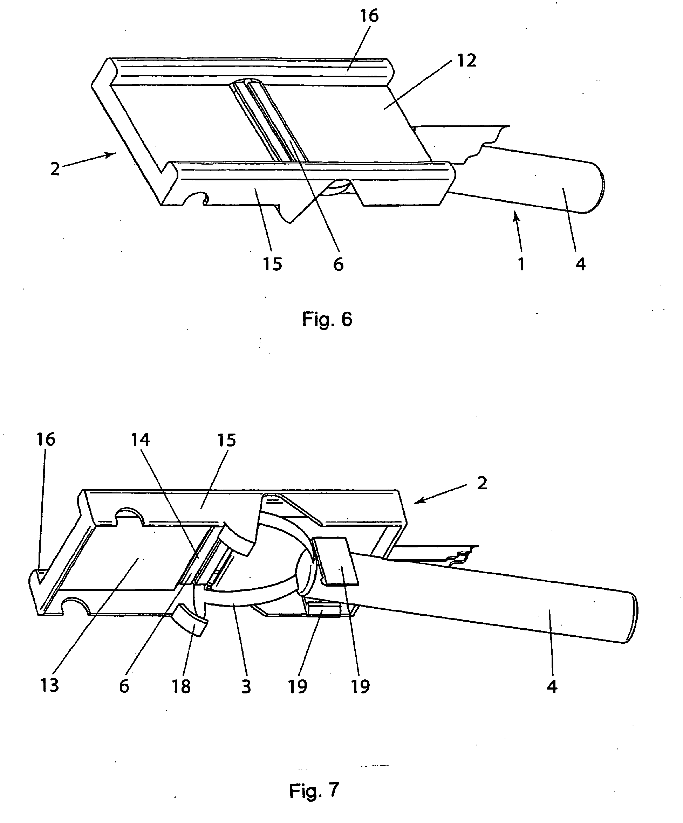

Fig. 6 is the axonometric top view of a preferred embodiment of the assembled kitchen device according to the invention, showing the device in the use position,
Fig. 7 is the axonometric underside view of a preferred embodiment of the kitchen device according to the invention, showing the device in the use position, and

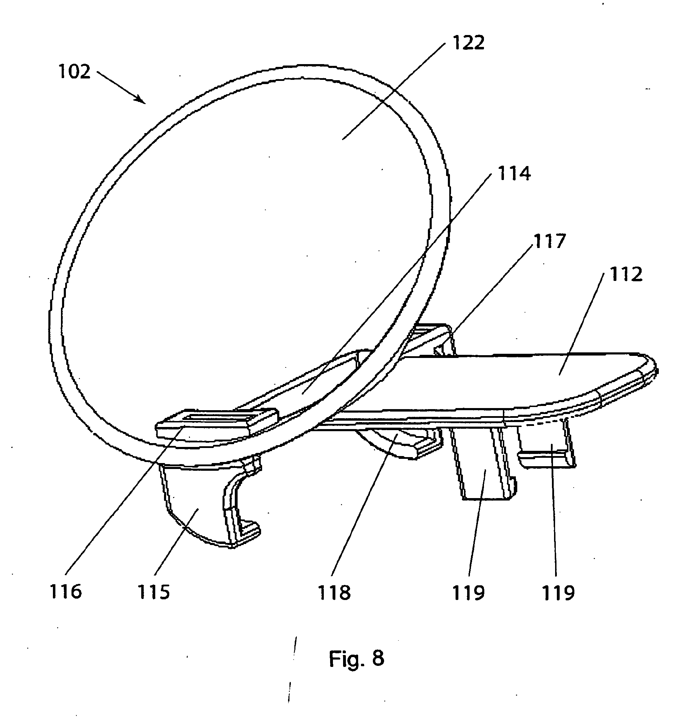

Fig. 8 is the axonometric top view of another preferred embodiment of the holding element according to the invention.

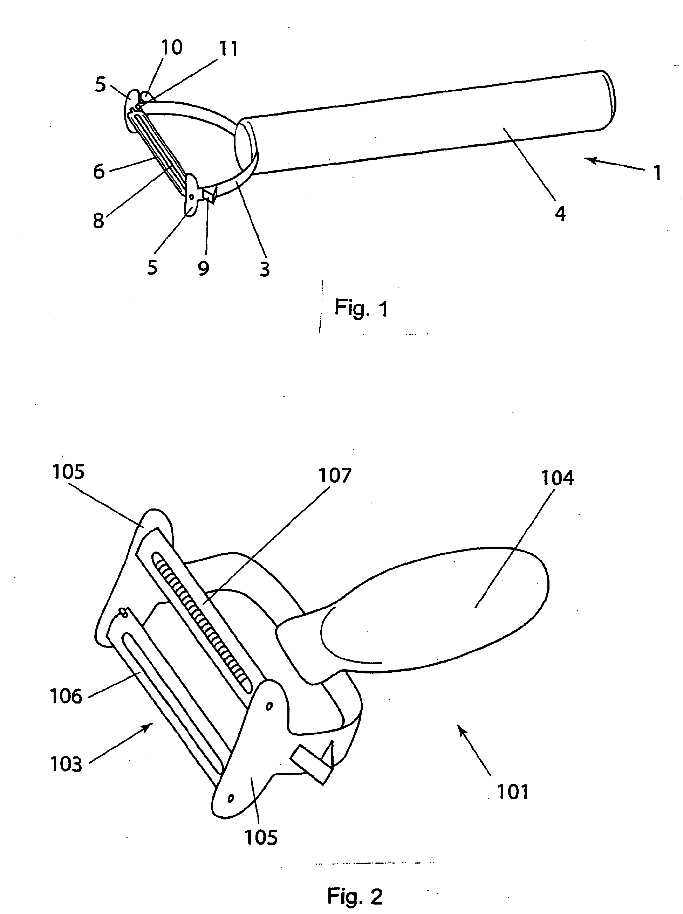

Fig. 1 shows an embodiment known per se of the cutting unit of the multiple kitchen utensil according to the present invention. The cutting unit 1 has a knife mount 3 and an elongated grip 4. In the embodiment shown in the drawing the grip 4 has a circular cross-sectional shape, but it may have oval or other similar cross section. In the embodiment of Fig. 1 the size of the cross section is the same along the full length of the grip 4. According to another embodiment the grip may have a variable-size cross section along its length, and may have a curved, reduced or increased cross section to fulfil ergonomic requirements. The length of the grip 4 is chosen such that the cutting unit 1 may be gripped easily. A knife mount 3 is connected to the grip 4. The knife mount 3 is essentially implemented as a U-shaped frame, with the stems thereof extending outward from the grip 4 being terminated in parallel prongs 5. According to the embodiment shown in Fig. 1 the frame of the knife mount 3 and the grip 4 are both made from metal, preferably from stainless steel, and are connected by a non-releasable connection. Either the frame or the grip, or both, may be made from other materials, and may also be releasably connected together.

A knife blade 6 is rotatably mounted between the prongs 5 of the knife mount 3. The rotation of the knife blade 6 is limited by stops 11 such that the stops 11 allow the knife blade 6 to be set to its proper use position. The knife blade 6 is implemented as a rectangular plate arranged perpendicular to the longitudinal axis of the grip 4 and having a through groove 8 arranged parallel with the longer side of the rectangle, where the through groove 8 has cutting edges such that it is capable of peeling or cutting fruits or vegetables. In a manner known per se, the cutting edges may have a smooth surface of may be serrated. The rectangular-shape plate of the knife blade has a slightly bent, curved surface shape. Gougers 9, 10 are disposed on the U-shaped frame of the knife mount.

Fig. 2 shows another known embodiment of the cutting unit of the multiple kitchen utensil according to the invention that has two knife blades. According to this embodiment the elongated grip 104 has a rounded shape with an oval cross section. A knife mount 103 is releasably connected to the grip 104. The stems of the U-shaped frame of the knife mount 103 are terminated in prongs 105, with knife blades 106, 107 being rotatably mounted between stops in a direction perpendicular to the longitudinal axis of the grip 104. Similarly to the arrangement shown in Fig. 1, the knife blade 106 is implemented as a substantially rectangular plate having a through groove comprising cutting edges, the through groove being arranged parallel with the longer side of the rectangle. In this embodiment cutting edges arranged in the through groove perpendicular to the knife blade 107 at a predetermined distance to one another. This knife blade arrangement is known per se, and is suitable for cutting vegetables to thin strips, which is also called "julienne cutting". In another preferred embodiment of the invention the device has multiple knife blades. With the exception of the knife blades the cutting unit may be made entirely of plastic. In another conceivable embodiment the cutting unit may be made from metal, for instance from stainless steel.

Figs. 3-5 illustrate the holding element of the present invention, shown in an axonometric front view. The holding element 2 is a body shaped as a rectangular-base block having an upper surface 12 and a bottom surface 13, with the upper surface 12 thereof being bounded by lengthwise extending edges 16. The bottom surface 13 also has edges 15. A through opening 14 is formed in the holding element 2 substantially in the middle thereof, the through opening extending to the edges 16. The through opening 14 is dimensioned to be slightly wider than the width of the knife blade 6, such that in the use position the knife blade 6 may comfortably fit to the through opening. The surface of the knife blade adapted for julienning, designated by the reference numeral 107 in Fig. 2, and bearing the perpendicularly arranged cutting edges, is wider than the other surface of the same knife blade. This arrangement allows that the wider portion of the knife blade may stop in a stable, swing-free position as it is pushed against the through opening of the holding element when the cutting unit is snapped to use position. With the knife blade secured in this position the device may be used for cutting with greater force.

The edges 15, 16 extend along the full length of the longer sides of the holding element 2. A curved guide groove 17 is cut in the edge 16 in the vicinity of the through opening 14, and a curved support groove 18 is machined in the portion of the edge 15 that extends under the bottom surface 13. The distance between the guide groove and the support groove is chosen such that the prongs 5 of the knife mount 3 of the cutting unit may be moved along the curved surface of the guide grooves 17 and may be inserted in the support grooves 18 so that the prongs 5 are supported in them.

In case the cutting unit having dual knife blades 101 is applied (as shown in Fig. 2), the prongs 105 comprise two pairs of rounded ends, where the ends corresponding to the knife blade to be used may be introduced between the guide grooves and the support grooves.

At a predetermined distance from the through opening 14 flexible tabs 19 extend from the bottom surface 13. The material and dimensions of the flexible tabs 19 allow that the grip of the cutting unit may be snapped in between them without resulting in a permanent deformation of the tabs.

The holding element is fitted with comfort elements that allow easier use of the device. The edges 15 comprise cutouts 21 at their ends distal from the flexible tabs 19. A support surface 20 is connected to the holding element at its end proximate to the flexible tabs 19. In the out-of-use position the cutting unit may be placed on the bottom surface of the holding element, and may be snapped between the flexible tabs 19. In this position the prongs of the cutting unit (including the gougers) comfortably fit in the cutouts 21, and the cutting unit is supported by the support surface 20. Thereby the elements of the device may be interconnected to form an integral unit. With the help of the cutouts 21 the kitchen device according to the invention may be placed on the rim of a bowl or container, which allows simpler use.

Fig. 6, 7 show the single-blade cutting unit 1 and the holding element 2 in the use position. As it is clearly seen in Fig. 6, only the knife blade 6 of the cutting unit extends from the upper surface 12 of the holding element 2. The cutting unit 1 is introduced between the guide grooves 17 and support grooves 18, and is snapped in between the flexible tabs 19.

Fig. 8 shows the axonometric top view of another embodiment of the holding element 102 according to the invention. Those details of this embodiment that are identical to the previously described ones are not explained again, only the different features are described. The holding element 102 has a block-shaped body having an upper surface 112 and a bottom surface that is not shown in the drawing, with the through opening 114 being disposed near the end of the body. In the vicinity of the through opening 114 edges 116 and 115 extend, respectively, from the upper surface and the bottom surface. Guide grooves 117 and support grooves 118 are formed in the edges. Similarly to the other embodiments, flexible tabs 119 are connected to the bottom surface of the holding element 102 at a predetermined distance. A guide element 122 is connected to the upper surface 112 of the holding element 102. The guide element 122 is made from sheet material folded to a funnel-like truncated cone shape, with the smaller-diameter circular surface of the truncated cone surrounding the through opening 114.

The guide element and the holding element may be implemented as an integral element, but embodiments where the guide element and the holding element are separate elements, and the guide element is snapped or slid on the holding element also fall in the scope of the present invention. The invention is not restricted to truncated-cone shaped guide elements as the guide element may have any other advantageous shape.

Before the kitchen utensil comprising the holding element 102 is used, the cutting unit should be introduced between the guide grooves 117 and support grooves 118, and the grip of the cutting unit should be snapped between the flexible tabs 119. The vegetables, for instance carrots, are introduced into the guide element 122 of the device assembled to the use position, while rotating them constantly, to obtain carrot slices or carrot pieces.

In addition to being suitable for versatile use, the multiple kitchen utensil according to the invention has the advantage of simple configuration and it can also be assembled easily.

The requested scope of protection of the invention is not limited to the arrangements described referring to the preferred embodiments. As it is obvious to those skilled in the art, the above described embodiments may be modified, improved, or combined within the scope of protection defined by the claims.

### List of reference numerals

- 1, 101: cutting unit
- 2, 102: holding element
- 3, 103: knife mount
- 4, 104: grip
- 5, 105: prong
- 6, 106: knife blade
- 107: knife blade
- 8: through groove
- 9: gouger
- 10: gouger
- 11: stop
- 12, 112: upper surface
- 13: bottom surface
- 14, 114: through opening
- 15,115: edge
- 16,116: edge
- 17, 117: guide groove
- 18, 118: support groove
- 19, 119: flexible tab
- 20: support surface
- 21: cutout
- 122: guide element

## Claims

1. Multiple kitchen utensil, primarily for peeling, slicing, or cutting fruits and vegetables, comprising a cutting unit (1, 101) and a holding element (2, 102), where the cutting unit (1, 101) has
- a knife mount (3, 103) and an elongated grip (4, 104) connected to the knife mount (3, 103), and where
- the knife mount (3, 103) is implemented as a U-shaped frame, with the stems thereof extending outward from the grip (4, 104) being terminated in parallel prongs (5, 105), and with at least one knife blade (6, 106, 107) being arranged between the prongs (5, 105) perpendicular to the longitudinal axis of the grip (4, 104), the knife blade (5, 105) being rotatably mounted between stops (11) attached to the prongs (5, 105),
**characterised by** that
- the holding element (2, 102) has an upper surface (12, 112) and a bottom surface (13), where a through opening (14, 114) dimensioned to receive the knife blade (6, 106, 107) is formed between the upper surface (12, 112) and the bottom surface (13),
- parallel edges (15, 16, 115, 116) extend from the upper and bottom surfaces of the holding element (2, 102) at least in the vicinity of the through opening (14, 114), the distance between the edges being the same as the distance between the prongs (5, 105).
- guide grooves (17, 117) and support grooves (18, 118) are formed in the edges (15, 16, 115, 116),
- flexible tabs (19, 119) are connected to the bottom surface of the holding element (2, 102),
- the cutting unit (1, 101) may be brought into the use position by introducing the prongs (5, 105) into the guide grooves (17, 117) and pushing them until stopped by the support grooves (18, 118), as well as by snapping in the grip (4, 104) of the cutting unit between the flexible tabs (19, 119), in which use position only the knife blade (6, 106, 107) extends from the through opening (14, 114) above the upper surface (12, 112) of the holding element.

2. The multiple kitchen utensil according to Claim 1, **characterised by** that the guide grooves (17, 117) and the support grooves (18, 118) have curved configuration.

3. The multiple kitchen utensil according to Claims 1 or 2, **characterised by** that the holding element (2, 102) is implemented as a rectangular-base block, with the edges (15, 16, 115, 116) being arranged along the entire length of the longer sides thereof at the peripheries of the upper surface (12, 112) and the bottom surface (13), and the through opening (14, 114) being disposed substantially in the middle of the holding element (2).

4. The multiple kitchen utensil according to Claims 1 or 2, **characterised by** that a guide element (122) is connected to the through opening (114) on the upper surface (112) of the holding element (102).

5. The multiple kitchen utensil according to one of the previous Claims, **characterised by** that the knife blade (6, 106, 107) is implemented as a rectangular plate comprising a through groove (8) arranged parallel with the longer side of the rectangle, with the through groove (8) having cutting edges such that it is capable of peeling or cutting fruits or vegetables.

6. The multiple kitchen utensil according to Claim 5, **characterised by** that cutting edges are arranged in the groove (8) perpendicular to the knife blade (107) at a predetermined distance from one another such that they are capable of peeling or cutting fruits or vegetables.

7. The multiple kitchen utensil according to one of the preceding Claims, **characterised by** that two differently configured knife blades (6, 106, 107) are mounted between the prongs (5, 105).

8. The multiple kitchen utensil according to any one of the preceding Claims, **characterised by** that in the out-of-use position the knife mount (3, 103) of the cutting unit may be laid on the bottom surface (13) of the holding element, and the grip (4, 104) may be snapped in between the flexible tabs (19, 119) such that the cutting unit (1, 101) and the holding element (2, 102) are connected to form an integral unit.

9. The multiple kitchen utensil according to any one of the preceding Claims, **characterised by** that a support surface (20) is connected to the holding element (2), the support surface being adapted to support the grip (4, 104) of the cutting unit in the out-of-use position.

## Patentansprüche

1. Vielseitiges Küchen-Utensil, insbesondere zum Schälen, in Scheiben Schneiden oder Zerstückeln von Obst oder Gemüse, mit einer Schneideinheit (1, 101) und einem Aufnahmeelement (2, 102), wobei die Schneideinheit (1, 101)
- ein Messerbauteil (3, 103) und einen an das Messerbauteil (3, 103) angeschlossenen länglichen Handgriff (4, 104) aufweist, und wobei
- das Messerbauteil (3, 103) als ein U-förmiger Rahmen ausgestaltet ist, dessen von dem Handgriff (4, 104) weg nach außen erstreckenden Schenkel in parallel verlaufende Gabelzinken (5, 105) enden, und zwischen den Gabelzinken (5, 105) mindenstens eine Messerklinge (6, 106, 107) senkrecht zur Längsachse des Handgriffs (4, 104) angeordnet ist, welche zwischen an den Gabelzinken (5, 105) angebrachten Anschlägen (11) drehbar befestigt ist,
**dadurch gekennzeichnet, dass**
- das Aufnahmeelement (2, 102) eine obere Fläche (12, 112) und eine untere Fläche (13) aufweist, wobei zwischen der oberen Fläche (12, 112) und der unteren Fläche (13) eine Durchgangsöffnung (14, 114) ausgebildet ist, die zum Aufnehmen der Messerklinge (6, 106, 107) dimensioniert ist,
- weningstens in der Nachbarkeit der Durchgangsöffnung (14, 114) sich parallele Ränder (15, 16, 115, 116) von der oberen Fläche und der unteren Fläche des Aufnahmeelements (2, 102) aus erstrecken, wobei der Abstand zwischen den Rändern dem Abstand zwischen den Gabelzinken (5, 105) entspricht,
- in den Rändern (15, 16, 115, 116) Führungsnuten (17, 117) und Abstütznuten (18, 118) ausgebildet sind,
- an der unteren Fläche des Aufnahmeelements (2, 102) elastische Laschen (19, 119) angebracht sind,
- die Schneideinheit (1, 101) durch Einführen der Gabelzinken (5, 105) in die Führungsnuten (17, 117) und Andrücken bis zum Anliegen an den Abstütznuten (18, 118), sowie durch Einschnappen des Handgriffs (4, 104) der Schneideinheit zwischen die elastischen Laschen (19, 119) in die Gebrauchslage gebracht werden kann, in der aus der Durchgangsöffnung (14, 114) nur die Messerklinge (6, 106, 107) über die obere Fläche (12, 112) des Aufnahmeelements herausragt.

2. Vielseitiges Küchen-Utensil nach Anspruch 1, **dadurch gekennzeichnet, dass** die Führungsnuten (17, 117) und die Abstütznuten (18, 118) jeweils eine bogenförmige Ausgestaltung haben.

3. Vielseitiges Küchen-Utensil nach Anspruch 1 oder 2, **dadurch gekennzeichnet, dass** das Aufnahmeelement (2, 102) als ein Quader mit rechteckiger Basisfläche ausgestaltet ist, bei dem die Ränder (15, 16, 115, 116) über die Gesamtlänge der längeren Seiten derselben an den Kanten der oberen Fläche (12, 112) und der unteren Flächen (13) ausgestaltet sind, und die Durchgangsöffnung (14, 114) im wesentlichen in der Mitte des Aufnahmeelements (2) angeordnet ist.

4. Vielseitiges Küchen-Utensil nach Anspruch 1 oder 2, **dadurch gekennzeichnet, dass** auf der obere Fläche (112) des Aufnahmeelements (102) ein Führungselement (122) an die Durchgangsöffnung (114) angeschlossen ist.

5. Vielseitiges Küchen-Utensil nach einem der vorhergehenden Ansprüche, **dadurch gekennzeichnet, dass** die Messerklinge (6, 106, 107) als eine rechteckige Platte ausgestaltet ist, die eine parallel zu der längeren Seite des Rechteckes verlaufenden Durchgangsnut (8) aufweist, die derart mit Schneidkanten ausgestaltet ist, dass sie zum Schälen oder Zerstückeln von Obst oder Gemüse geeignet ist.

6. Vielseitiges Küchen-Utensil nach Anspruch 5, **dadurch gekennzeichnet, dass** Schneidkanten in der Nut (8) senkrecht zu der Messerklinge (107) mit einer vorgegebenen Abstand zwischen ihnen derart angeordnet sind, dass sie zum Schälen oder Zerstückeln von Obst oder Gemüse geeignet sind.

7. Vielseitiges Küchen-Utensil nach einem der vorhergehenden Ansprüche, **dadurch gekennzeichnet, dass** zwischen den Gabelzinken (5, 105) zwei unterschiedlich ausgebildete Messerklingen (6, 106, 107) befestigt sind.

8. Vielseitiges Küchen-Utensil nach einem der vorhergehenden Ansprüche, **dadurch gekennzeichnet, dass** außer Gebrauchslage das Messerbauteil (3, 103) der Schneideinheit auf die untere Fläche (13) des Aufnahmeelements gelegt werden kann, und der Handgriff (4, 104) zwischen die elastischen Laschen (19, 119) eingeschnappt werden kann, so dass die Schneideinheit (1, 101) und das Aufnahmeelement (2, 102) zu einem Einheit verbunden wird.

9. Vielseitiges Küchen-Utensil nach einem der vorhergehenden Ansprüche, **dadurch gekennzeichnet, dass** an das Aufnahmeelement (2) eine Abstützfläche (20) angeschlossen ist, die dazu adaptiert ist, den Handgriff (4, 104) der Schneideinheit außer Gebrauchslage abzustützen.

## Revendications

1. Ustensile de cuisine multiple, principalement pour peler, trancher ou couper des fruits et des légumes, comprenant une unité de coupe (1, 101) et un élément de maintien (2, 102), dans lequel l'unité de coupe (1, 101) comprend:
une monture de couteau (3, 103) et un manche allongé (4, 104) connecté à la monture de couteau (3, 103), et dans lequel:
la monture de couteau (3, 103) est réalisée sous la forme d'un cadre en forme de U, dont les branches s'étendent vers l'extérieur à partir du manche (4, 104) et se terminent en griffes parallèles (5, 105), et dans lequel au moins une lame de couteau (6, 106, 107) est agencée entre les griffes (5, 105) perpendiculairement à l'axe longitudinal du manche (4, 104), la lame de couteau (5, 105) étant montée de façon rotative entre des arrêts (11) attachés aux griffes (5, 105),
**caractérisé en ce que**:
l'élément de maintien (2, 102) présente une surface supérieure (12, 112) et une surface inférieure (13), dans lequel une ouverture traversante (14, 114), dimensionnée pour recevoir la lame de couteau (6, 106, 107), est formée entre la surface supérieure (12, 112) et la surface inférieure (13),
des bords parallèles (15, 16, 115, 116) s'étendent à partir des surfaces supérieure et inférieure de l'élément de maintien (2, 102) au moins près de l'ouverture traversante (14, 114), la distance entre les bords étant la même que la distance entre les griffes (5, 105),
des rainures de guidage (17, 117) et des rainures de support (18, 118) sont formées dans les bords (15, 16, 115, 116);
des pattes flexibles (19, 119) sont connectées à la surface inférieure de l'élément de maintien (2, 102); et
l'unité de coupe (1, 101) peut être amenée dans la position d'utilisation en introduisant les griffes (5, 105) dans les rainures de guidage (17, 117) et en les poussant jusqu'à ce qu'elles soient arrêtées par les rainures de support (18, 118), ainsi qu'en les calant dans le manche (4, 104) de l'unité de coupe entre les pattes flexibles (19, 119), position d'utilisation dans laquelle seule la lame de couteau (6, 106, 107) s'étend à partir de l'ouverture traversante (14, 114) au-dessus de la surface supérieure (12, 112) de l'élément de maintien.

2. Ustensile de cuisine multiple selon la revendication 1, **caractérisé en ce que** les rainures de guidage (17, 117) et les rainures de support (18, 118) présentent une configuration courbe.

3. Ustensile de cuisine multiple selon la revendication 1 ou 2, **caractérisé en ce que** l'élément de maintien (2, 102) est réalisé comme un bloc à base rectangulaire, dont les bords (15, 16, 115, 116) sont agencés le long de toute la longueur des côtés plus longs de celui-ci aux périphéries de la surface supérieure (12, 112) et de la surface inférieure (13) et l'ouverture traversante (14, 114) est disposée sensiblement au milieu de l'élément de maintien (2).

4. Ustensile de cuisine multiple selon la revendication 1 ou 2, **caractérisé en ce qu'**un élément de guidage (122) est connecté à l'ouverture traversante (114) sur la surface supérieure (112) de l'élément de maintien (102).

5. Ustensile de cuisine multiple selon l'une quelconque des revendications précédentes, **caractérisé en ce que** la lame de couteau (6, 106, 107) est réalisée sous la forme d'une plaque rectangulaire comprenant une rainure traversante (8) agencée parallèlement au côté plus long du rectangle, dans lequel la rainure traversante (8) comporte des bords de coupe de manière à être capable de peler ou de couper des fruits ou des légumes.

6. Ustensile de cuisine multiple selon la revendication 5, **caractérisé en ce que** les bords de coupe sont agencés dans la rainure (8) perpendiculairement à la lame de couteau (107) à une distance prédéterminée l'un de l'autre de manière à être capables de peler ou de couper des fruits ou des légumes.

7. Ustensile de cuisine multiple selon l'une quelconque des revendications précédentes, **caractérisé en ce que** deux lames de couteau configurées différemment (6, 106, 107) sont montées entre les griffes (5, 105).

8. Ustensile de cuisine multiple selon l'une quelconque des revendications précédentes, **caractérisé en ce que** dans la position de non-utilisation, la monture de couteau (3, 103) de l'unité de coupe peut être déposée sur la surface inférieure (13) de l'élément de maintien, et le manche (4, 104) peut être calé entre les pattes flexibles (19, 119) de telle sorte que l'unité de coupe (1, 101) et l'élément de maintien (2, 102) soient connectés de manière à former une unité intégrée.

9. Ustensile de cuisine multiple selon l'une quelconque des revendications précédentes, **caractérisé en ce qu'**une surface de support (20) est connectée à l'élément de maintien (2), la surface de support étant adaptée pour supporter le manche (4, 104) de l'unité de coupe dans la position de non-utilisation.
